Europäisches Patentamt

European Patent Office

Office européen des brevets

(11) Veröffentlichungsnummer: **0 340 509**

**A2**

# (12) EUROPÄISCHE PATENTANMELDUNG

(21) Anmeldenummer: **89106716.7**

(22) Anmeldetag: **14.04.89**

(51) Int. Cl.⁴: **G01N 27/02**

(30) Priorität: **19.04.88 DE 3812959**

(43) Veröffentlichungstag der Anmeldung:
**08.11.89 Patentblatt 89/45**

(84) Benannte Vertragsstaaten:
**AT BE CH DE ES FR GB IT LI NL**

(71) Anmelder: **Seiffert, Volkhard, Dr.-Ing.,**
**Krausenstrasse 54A**
**D-3000 Hannover(DE)**

Anmelder: **Ihlenfeld, Gerd**
**Krausenstrasse 54A**
**D-3000 Hannover(DE)**

Anmelder: **Bienert, Klaus**
**Krausenstrasse 54A**
**D-3000 Hannover(DE)**

(72) Erfinder: **Seiffert, Volkhard, Dr.-Ing.,**
**Krausenstrasse 54A**
**D-3000 Hannover(DE)**
Erfinder: **Ihlenfeld, Gerd**
**Krausenstrasse 54A**
**D-3000 Hannover(DE)**
Erfinder: **Bienert, Klaus**
**Krausenstrasse 54A**
**D-3000 Hannover(DE)**

(74) Vertreter: **Döring, Roger, Dipl.-Ing.**
**Weidenkamp 2**
**D-3012 Langenhagen(DE)**

(54) **Vorrichtung und Verfahren zur Bestimmung der Anteile der Komponenten eines Gemisches.**

(57) Es wird eine Vorrichtung zur Bestimmung der Anteile der Komponenten eines Gemisches aus mindestens zwei Komponenten mit unterschiedlicher elektrischer Leitfähigkeit angegeben, die aus mindestens zwei an eine elektrische Wechselspannungsquelle anschließbaren Elektroden unterschiedlicher Polarität besteht. Das Gemisch ist zwischen den Elektroden einbringbar. Jede Elektrode besteht aus einer kleinflächigen Stiftelektrode und einer im Verhältnis zu derselben großflächigen Flächenelektrode, die auf gleichem Potential liegen. Die Stiftelektrode hat beim Betrieb der Vorrichtung elektrisch leitenden Kontakt mit dem Gemisch, während die Flächenelektrode gegenüber dem Gemisch isoliert ist.

Die Erfindung bezieht sich auf eine Vorrichtung zur Bestimmung der Anteile der Komponenten eines Gemisches aus mindestens zwei Komponenten mit unterschiedlicher elektrischer Leitfähigkeit, bestehend aus mindestens zwei an eine elektrische Wechselspannungsquelle anschließbaren Elektroden unterschiedlicher Polarität, zwischen denen das Gemisch einbringbar ist sowie auf ein mit der Vorrichtung arbeitendes Verfahren (DE-OS 27 48 809).

Zur Steuerung und Überwachung industrieller Prozesse, bei dem Gemische aus mindestens zwei Komponenten mit unterschiedlicher elektrischer Leitfähigkeit im Einsatz sind, werden Vorrichtungen benötigt, mit denen Anteile oder auch Konzentration und/oder Dichte der unterschiedlichen Komponenten bestimmt werden können. Das gilt auch für Komponenten mit gleichem oder unterschiedlichem Aggregatzustand. Das kann in bekannter Technik mit Vorrichtungen erreicht werden, mit denen die elektrische Leitfähigkeit oder die relative Dielektrizitätskonstante des Gemisches als resultierende Werte erfaßt und ausgewertet werden.

Eine dafür verwendbare Vorrichtung geht aus der DE-OS 28 06 153 hervor. Sie weist sechs Kondensatorelektroden auf, die auf einer Kreisbahn in Umfangsrichtung gegeneinander versetzt an oder in einem Rohr angeordnet sind. Die Elektroden werden aus einer Einphasen-Hochfrequenz-Oszillatorspannung mit einer speziellen elektrischen Schaltung beaufschlagt. Mit dieser Vorrichtung wird eine Kapazitätsmessung eines durch das Rohr strömenden Gemisches durchgeführt. Sie ist daher auf Komponenten aus elektrisch nicht leitenden Materialien beschränkt.

Die Vorrichtung nach der eingangs erwähnten DE-OS 27 48 809 besteht aus drei langgestreckten Elektrodenpaaren, die auf einer Kreisbahn in Umfangsrichtung gegeneinander versetzt angeordnet sind. Das Gemisch, dessen anteilige Zusammensetzung bestimmt werden soll, wird zwischen den Elektrodenpaaren hindurchgeführt, zwischen denen mittels einer elektrischen Schaltung der elektrische Widerstand des Gemisches gemessen wird. Die Elektroden müssen elektrisch leitenden Kontakt mit dem Gemisch haben. Mit dieser Vorrichtung wird also die elektrische Leitfähigkeit des Gemisches gemessen. Das führt in vielen Fällen zu unbefriedigenden Meßergebnissen, da die Leitfähigkeit des Gemisches in weiten Grenzen schwanken kann. So hat beispeilsweise bei einem Wasser-Luft-Gemisch die Luft gegenüber dem Wasser eine wesentlich geringere Leitfähigkeit. Wenn das Mischungsverhältnis zwischen 0 und 100 % Luftanteil variiert, dann muß die Auflösung einer die Meßwerte auswertenden elektrischen Schaltung so hoch sein, daß sowohl die hohe Leifähigkeit des Wassers bei etwa 100 % Wasseranteil als auch die geringe Leitfähigkeit der Luft bei etwa 100 % Luftanteil erfaßt werden können. Diese Anforderung ist technisch nicht sinnvoll zu realisieren.

Der Erfindung liegt die Aufgabe zugrunde, eine Vorrichtung anzugeben, mit der die Anteile der Komponenten eines Gemisches aus mindestens zwei beliebigen Komponenten mit unterschiedlicher elektrischer Leitfähigkeit auf einfache Weise mit großer Genauigkeit bestimmt werden kann.

Diese Aufgabe wird mit einer Vorrichtung der eingangs geschilderten Art gemäß der Erfindung dadurch gelöst,
- daß jede Elektrode aus einer kleinflächigen Stiftelektrode und einer im Verhältnis zu derselben großflächigen Flächenelektrode besteht,
- daß die Stiftelektrode beim Betrieb der Vorrichtung elektrisch leitenden Kontakt mit dem Gemisch hat, während die Flächenelektrode gegenüber dem Gemisch isoliert ist und
- daß Stiftelektrode und Flächenelektrode jeweils an gleiches Potential angeschlossen sind.

Mit dieser Vorrichtung werden sowohl die elektrische Leitfähigkeit als auch die Kapazität des Gemisches erfaßt. Die Vorrichtung ist daher für beliebige Gemische anwendbar, deren Leitfähigkeit in weiten Grenzen schwanken kann. Der Aufbau ist einfach, da für jede Elektrode nur eine Stiftelektrode und eine Flächenelektrode anzubringen sind. Durch die im Verhältnis zur Flächenelektrode kleinflächige Stiftelektrode wird der der Leitfähigkeit entsprechende Meßwert begrenzt, während der kapazitive Anteil des Stromes wegen der großflächigen Flächenelektroden zu einem relativ großen Meßwert führt. Beide Meßwerte sind daaher gut und einfach zu erfassen. Dadurch kann eine elektrische Auswerteschaltung Anwendung finden, die einen technisch sinnvoll realisierbaren Meßbereich mit einer ebensolchen Meßwertauflösung abdeckt.

Für eine physikalisch korrekte Auswertung des resultierenden elektrischen Meßsignals und die nachfolgende Bestimmung der Anteile der Komponenten und damit deren Konzentrationen und Dichten, kann es erforderlich sein, die Elektroden von unerwünschten Fremdeinflüssen, hervorgerufen durch die technischen Bedingungen am Meßort, abzuschirmen. Dazu können die Stiftelektroden und/oder die Flächenelektroden in vorteilhaften Ausgestaltungen der Erfindung rundum mit Schirmen umgeben werden, die gegenüber den zugehörigen Elektroden isoliert angeordnet sind. Der die Flächenelektrode umgebende Schirm verhindert eine Ausbreitung des elektrischen Feldes der Flächenelektrode zu benachbarten Elektroden. Sie ermöglicht dadurch auch die ungestörte Anordnung mehrerer Elektrodenpaare nebeneinander. Da das elektrische Potential des Isolationsmaterials über der Flächenelektrode aufgrund der elektrischen Verluste in demselben niedriger ist als das der nicht isolierten Stiftelektrode, über die bei einem leitfähigen Gemisch der ohmsche Anteil des Meßstroms fließt, kann die Stiftelektrode von einem ebenfalls nicht isolierten Schirm umgeben sein. Hierdurch wird verhindert, daß bei Benetzung von Wandungen einer entsprechenden Vorrichtung der Meßstrom über einen Wandfilm zur Komplementärelektrode fließt.

Weitere vorteilhafte Ausgestaltungen der Erfindung gehen aus den Unteransprüchen hervor.

Ausführungsbeispiele der Vorrichtung nach der Erfindung sind in den Zeichnungen dargestellt.

Es zeigen:

Fig. 1 eine mit einer Vorrichtung nach der Erfindung ausgerüstete Rohrleitung.

Fig. 2 und 3 zwei unterschiedliche Ausführungsformen der Vorrichtung.

Fig. 4 bis 6 drei unterschiedliche Ausführungsformen verwendbarer Elektroden.

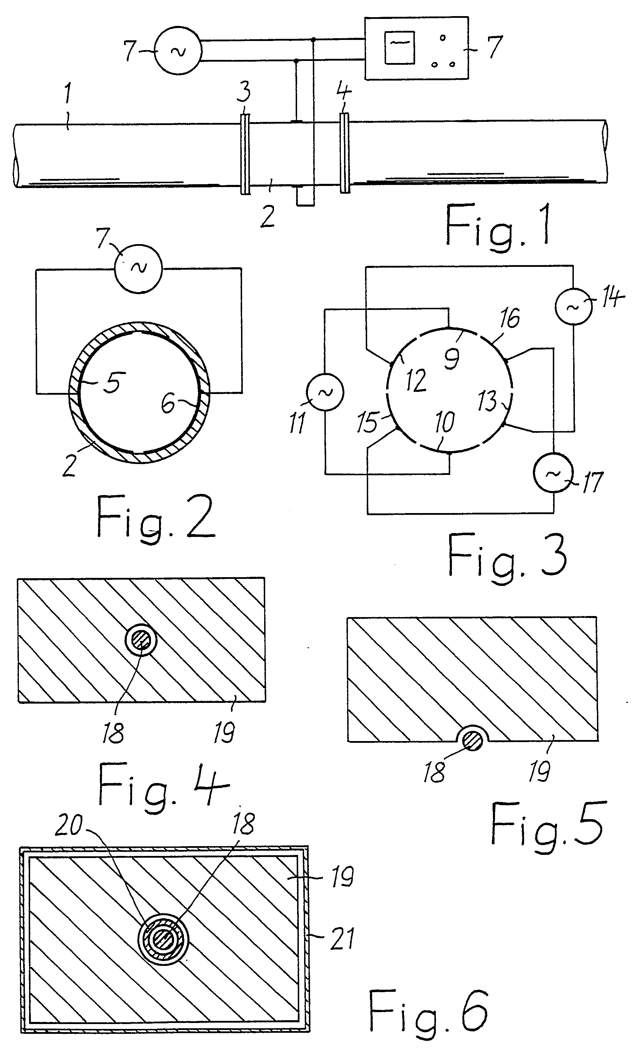

In einer nur auszugsweise angedeutete Rohrleitung 1 ist eine Vorrichtung 2 eingebaut, deren genauerer Aufbau aus den Fig. 2 und 3 hervorgeht. Mit der Vorrichtung 2 können die Anteile der Komponenten eines Gemisches bestimmt werden, das mindestens zwei Komponenten mit unterschiedlicher elektrischer Leitfähigkeit aufweist und das durch die Rohrleitung 1 bewegt wird. Die Vorrichtung 2 ist in diesem Fall als Rohrstück ausgebildet, das beispielsweise mittels Flanschen 3 und 4 in die Rohrleitung· 1 eingebaut ist. In der als Rohrstück ausgebildeten Vorrichtung 2 sind mindestens zwei Elektroden 5 und 6 angebracht, an welche eine Wechselspannungsquelle 7 angeschlossen ist. Die Elektroden 5 und 6 haben unterschiedliche Polarität. Sie sollen die innere Oberfläche des Rohrstücks in Umfangsrichtung möglichst vollständig bedecken. An die Elektroden 5 und 6 ist außerdem ein Meßgerät angeschlossen, mit dem der zwischen den Elektroden 5 und 6 fließende Strom gemessen werden kann. Das Meßergebnis wird einem Anzeigegerät 8 zugeführt.

Die Elektroden der Vorrichtung müssen nicht in einem Rohr oder Rohrstück angeordnet sein. Es ist auch jede beliebige andere Anordnung denkbar. Die beiden Elektroden unterschiedlicher Polarität müssen nur so angeordnet sein, daß ein Gemisch, für das die Anteile seiner Komponenten bestimmt werden sollen, zwischen die beiden Elektroden eingebracht werden kann.

Wenn die Vorrichtung 2 als Rohrstück ausgebildet ist, können in bevorzugter Ausführungsform auch mehr als zwei Elektroden eingesetzt werden. So können entsprechend Fig. 3 sechs Elektroden verwendet werden, die in Umfangsrichtung gegeneinander versetzt sind. Jeweils zwei einander diametral gegenüberliegende Elektroden bilden dann ein Elektrodenpaar, das an eine gemeinsame Wechselspannungsquelle angeschlossen ist. So sind die Elektroden 9 und 10 mit der Wechselspannungsquelle 11, die Eelektroden 12 und 13 mit der Wechselspannungsquelle 14 und die Elektroden 15 und 16 mit der Wechselspannungsquelle 17 verbunden. Die Spannung der Wechselspannungsquellen kann beispielsweise einen Wert von 10 V mit einer Frequenz von bis zu 100 kHz haben. Die sechs Elektroden einer solchen Vorrichtung werden jeweils mit 60° Phasenverschiebung aus den Wechselspannungsquellen 11, 14 und 17 gespeist.

Die Elektroden der Fig. 2 und 3 können grundsätzlich entsprechend den Fig. 4 bis 6 aufgebaut sein:

Jede Elektrode besteht demnach einer Stiftelektrode 18 mit kleiner Fläche und einer Flächenelektrode 19 mit im Verhältnis zur Stiftelektrode 18 großer Fläche. Stiftelektrode 18 und Flächenelektrode 19 bestehen entweder aus einem Stück oder sie sind gegeneinander isoliert. Sie sind beispielsweise durch einen Spalt getrennt in eine Wand eingebaut. Sie liegen jedoch an gleichem Potential. Die Stiftelektrode 18 wird so angeordnet, daß sie beim Betrieb der Vorrichtung elektrisch leitenden Kontakt mit dem Gemisch hat, für das die Anteile seiner Komponenten bestimmt werden sollen. Im Gegensatz dazu wird die Flächenelektrode 19 gegenüber dem Gemisch isoliert.

Die Stiftelektrode 18 kann in einer Durchbrechung der Flächenelektrode 19 angebracht sein, so wie es in Fig. 4 dargestellt ist. In bevorzugter Ausführungsform wird die Stiftelektrode 18 dabei in der Mitte der Flächenelektrode 19 angebracht. Die Stiftelektrode 18 und die Flächenelektrode 19 können aber auch entsprechend Fig. 5 nebeneinander angeordnet werden. Es ist dabei insbesondere möglich, die Stiftelektrode 18 in einer seitlichen Ausnehmung der Flächenelektrode 19 anzubringen.

Um sicherzustellen, daß das Meßergebnis unabhängig von konstruktiven Gegebenheiten und äußeren Einflüssen störungsfrei bleibt, werden die Stiftelektrode 18 und die Flächenelektrode 19 gemäß Fig. 6 vorzugsweise mit Schirmen 20 und 21 versehen. Der Schirm 20 umgibt die Stiftelektrode 18. Er ist gegenüber derselben isoliert und hat beim Betrieb der Vorrichtung ebenso wie die Stiftelektrode 18 elektrisch leitenden Kontakt mit dem Gemisch. Der Schirm 21 umgibt die Flächenelektrode 19 rundum. Er ist gegenüber der Flächenelektrode 19 und auch gegenüber dem Gemisch isoliert. Die Schirme 20 und 21 stellen sicher, daß die zwischen den Elektroden aufzubauenden Felder nicht zu benachbarten Elektroden reichen, sondern in gerichteter Form jeweils zu der gegenüberliegenden Elektrode führen. Stiftelektrode 18, Flächenelektrode 19 und beide Schirme 20 und 21 liegen jeweils auf gleichem Potential.

Es ist auch möglich, die Elektroden so aufzubauen, daß entweder nur die Flächenelektrode 19 einen Schirm 21 oder die Stiftelektrode 18 einen Schirm 20 aufweist. In bevorzugter Ausführungsform sind jedoch beide Schirme 20 und 21 vorhanden.

Zur Benutzung der Vorrichtung 2 wird beispielsweise wie folgt vorgegangen:

Nach Montage der Vorrichtung 2, beispielsweise in einer Rohrleitung 1 nach Fig. 1, wird dieselbe zunächst kalibriert. Dazu werden die Komponenten eines Gemisches zunächst getrennt durch die Vorrichtung 2 hindurchgeführt. Es kann dabei beispielsweise für ein Wasser-Luft-Gemisch zunächst Wasser durch die Vorrichtung 2 hindurchgeschickt werden, dessen Temperatur erhöht wird. In gleicher Weise wird anschließend Luft durch die Vorrichtung hindurchgeführt, die mit steigendem Druck beaufschlagt wird. Ein durch die Kalibrierung gewonnene Kurvenverlauf entspricht den Eckwerten der reinen Komponenten. Die mit der Vorrichtung 2 gemessenen Werte liegen zwischen der Kurve für das Wasser einerseits und der Kurve für die Luft andererseits. Für eine quantitative Auswertung der Meßergebnisse werden außerden während des Verfahrens auch Temperatur und/oder Druck des Gemisches gemessen.

**Ansprüche**

1. Vorrichtung zur Bestimmung der Anteile der Komponenten eines Gemisches aus mindestens zwei Komponenten mit unterschiedlicher elektrischer Leitfähigkeit, bestehend aus mindestens zwei an eine elektrische Wechselspannungsquelle anschließbaren Elektroden unterschiedlicher Polarität, zwischen denen das Gemisch einbringbar ist, dadurch gekennzeichnet,
-daß jede Elektrode (5,6) aus einer kleinflächigen Stiftelektrode (18) und einer im Verhältnis zu derselben großflächigen Flächenelektrode (19) besteht,
- daß die Stiftelektrode (18) beim Betrieb der Vorrichtung (2) elektrisch leitenden Kontakt mit dem Gemisch hat, während die Flächenelektrode (19) gegenüber dem Gemisch isoliert ist und
- daß Stiftelektrode (18) und Flächenelektrode (19) jeweils an geliches Potential angeschlossen sind.

2. Vorrichtung nach Anspruch 1, dadurch gekennzeichnet, daß die Stiftelektrode (18) rundum von einem gegenüber derselben durch Isoliermaterial getrennten Schirm (20) umgeben ist, der an gleiches Potential wie die Stiftelektrode (18) angeschlossen ist und beim Betrieb der Vorrichtung (2) elektrisch leitfähigen Kontakt mit dem Gemisch hat.

3. Vorrichtung nach Anspruch 1, dadurch gekennzeichnet, daß die Flächenelektrode (19) rundum von einem gegenüber derselben durch Isoliermaterial getrennten Schirm (21) umgeben ist, der an gleiches Potential wie die Flächenelektrode (19) angeschlossen und beim Betrieb der Vorrichtung (2) gegenüber dem Gemisch isoliert ist.

4. Vorrichtung nach Anspruch 1, dadurch gekennzeichnet, daß sowohl die Stiftelektrode (18) als auch die Flächenelektrode (19) rundum von einem gegenüber der jeweiligen Elektrode isolierten Schirm (20,21) umgeben ist.

5. Vorrichtung nach einem der Ansprüche 1 bis 4, dadurch gekennzeichnet, daß die Stiftelektrode (18) in einer vorzugsweise in der Mitte der Flächenelektrode (19) befindlichen Durchbrechung derselben angeordnet ist.

6. Vorrichtung nach einem der Ansprüche 1 bis 4, dadurch gekennzeichnet, daß die Stiftelektrode (18) außerhalb der Flächenelektrode (19) angeordnet ist.

7. Vorrichtung nach einem der Ansprüche 1 bis 6, dadurch gekennzeichnet, daß die Elektroden (5,6) an bzw. in einem Rohrstück angeordnet sind, das in eine Rohrleitung (1) einbaubar ist und dessen innere Oberfläche in Umfangsrichtung gesehen nahezu vollständig von den Elektroden (5,6) bedeckt ist.

8. Vorrichtung nach einem der Ansprüche 1 bis 7, dadurch gekennzeichnet, daß an bzw. in dem Rohrstück sechs Elektroden (9,10,12,13,15,16) in Umfangsrichtung gegeneinander versetzt angebracht sind, von denen jeweils zwei einander diametral gegenüberliegende mit entgegengesetzter Polarität an gleiches Potential anschließbar sind.

9. Verfahren zur Bestimmung der Anteile der Komponenten eines Gemisches aus mindestens zwei Komponenten unterschiedlicher elektrischer Leitfähigkeit mit einer Vorrichtung nach einem der Ansprüche 1 bis 8, dadurch gekennzeichnet,
- daß die Vorrichtung (2) zunächst in Abhängigkeit vom Druck und von der Temperatur des Gemisches kalibriert wird,
- daß anschließend die Elektroden (5,6) mit einer Wechselspannung beaufschlagt werden,
- daß der zwischen der Elektroden (5,6) fließende Strom mit den kalibrierten Werten verglichen wird und
- daß während des Ablaufs des Verfahrens Temperatur und/oder Druck des Gemisches gemessen werden.

Fig. 1

Fig. 2

Fig. 3

Fig. 4

Fig. 5

Fig. 6

ISI 1